# EUROPEAN PATENT SPECIFICATION

(11) **EP 2 992 992 B1**
(45) Date of publication and mention of the grant of the patent: **14.10.2020**
(21) Application number: 14792185.2
(22) Date of filing: 23.04.2014
(51) Int. Cl.: B23K 20/08, B23K 20/16, F16L 13/007, B23K 20/227, B23K 101/06, B23K 103/20

(54) **DIFFERENT-MATERIAL JOINT AND METHOD OF PRODUCTION OF SUCH DIFFERENT-MATERIAL JOINT**
VERBINDUNG AUS UNTERSCHIEDLICHEN MATERIALIEN, UND VERFAHREN ZUM HERSTELLEN EINER SOLCHEN VERBINDUNG AUS UNTERSCHIEDLICHEN MATERIALIEN
JOINT AYANT DIFFÉRENTS MATÉRIAUX, ET MÉTHODE DE FABRICATION D'UN TEL JOINT AYANT DES DIFFÉRENTS MATÉRIAUX

(30) Priority: 28.04.2013 CN 201320229490 U
(43) Date of publication of application: 09.03.2016
(73) Proprietor: Asahi Kasei Chemicals Corporation, Tokyo 100-0006 (JP)
(72) Inventor: OTSUKA, Masahiko, Tokyo 101-8101 (JP); SATOU, Daigo, Tokyo 101-8101 (JP)
(74) Representative: D Young & Co LLP
(86) International application number: PCT/JP2014/061410
(87) International publication number: WO 2014/178315

(56) References cited:
- JP-A- H0 929 463
- JP-A- H01 228 685
- JP-A- H07 185 840
- JP-A- H11 179 567
- JP-A- 2012 200 744
- JP-B2- 3 821 966
- US-A- 4 010 965
- US-A- 4 010 965
- US-A- 4 887 761
- US-A- 5 213 904

## Description

### Technical Field

The present invention relates to a different-material joint which is used for joining dissimilar metal materials by welding (below, also simply referred to as a "different-material joint", "dissimilar joint" or "dissimilar metal joint") according to the preamble of claim 1 (see for example US 4 010 965), and a method of production of such different-material joint, see claim 7.

### Background Art

In industrial use facilities and apparatuses, various types of metal materials are being used, so there are many parts where dissimilar metals are joined or bonded. When joining or bonding these dissimilar metal materials, with metal materials which cannot be welded, mainly flanges are used for mechanically joining them by bolting, but when fastening the flanges, a tremendous number of bolts have to be used when assembling the equipment and a massive amount of time is required. In addition, time is required for tightening and other periodic maintenance. Further, there is the problem of a low reliability in terms of performance such as a propensity to leakage.

On the other hand, in the case of weldable dissimilar metals, the materials are just welded, so the structure is extremely simple and the cost of fabrication can be lowered, but to weld metals with different characteristics, skill of the welder is needed and setting and managing the welding conditions are difficult. There is the problem that weld defects easily occur and the problem that the alloy of the two metals which is formed at the weld zone causes a drop in performance. For this reason, when the joined part is to be used in a harsh environment or when extremely high joint characteristics are required, dissimilar metal joint materials which are comprised of different materials which are metallurgically bonded in the same way as the same types of metals can be welded together are being increasingly used.

As the method for producing a dissimilar metal joint material which is comprised of these dissimilar metal materials, there are explosive welding, HIP, soldering, etc. The two ends of the joint material are designed to be materials which are welded with similar ones. To facilitate joining of the metal materials at the two ends or to improve the performance, sometimes separate materials are inserted.

In recent years, liquefaction and gasification plant facilities and air separation apparatuses of liquefied natural gas (LNG) and shale gas etc. have been increasingly built all over the world. In these facilities and apparatuses, there are numerous joined parts of dissimilar metals which become cryogenic environments. In these gas related facilities, joint materials which are highly reliable even under cryogenic environments are being sought. In these gas related facilities, high joint performance is being sought even under cryogenic environments. If the joined state of the joint or bonding interface of a joint material is poor, there is a possibility of a drop in the mechanical characteristics of the joint or bonding interface whereby leakage occurs and of leading to a major accident.

Further, in tankers which transport these gases, the gases are cooled to cryogenic temperatures to liquefy them and reduce their volume for transport, so joints which join the cryogenic containers which store the liquefied gas with the ship hulls have become necessary. In particular, Moss type tankers require joints which join spherical tanks made of aluminum with ship hulls made of steel. When the joined state of the joint or bonding interface of such a joint material is poor, peeling occurs and the joint or bonding interface is reduced in mechanical characteristics. There is a possibility of this leading to a major accident such as a close to 1,000 ton spherical tank falling off.

The following Patent Document 1 discloses a dissimilar joint of aluminum and steel comprised of two layers or three layers which is fabricated by explosive welding. It describes a method of improving the joint strength against weld heat at the interface when welding the dissimilar joint by making the wave height of the bonding interface of the aluminum and steel (wave height and length) larger. However, while Patent Document 1 describes the bonding strength against weld heat at the interface, it does not allude to leakage or the soundness of the bonding interface when used as a dissimilar joint of cryogenic equipment.

The following Patent Document 2 describes a method of improving the bonding strength against weld heat at a bonding interface by giving relief shapes to the bonding interface of the materials to be bonded and bonding them in the state with the relief shapes engaged, but does not allude to the characteristics of a bonding interface when used as a dissimilar joint.

The following Patent document 3 improves the performance at cryogenic temperatures by providing a titanium or nickel layer between aluminum or aluminum alloy and stainless steel, but does not allude to the wave height of the layer or method of production.

The following Patent Document 4 describes as a method of production of a multilayer clad material of aluminum+titanium+nickel+steel a method of welding together layers including titanium by explosive welding during which using argon gas to reduce the alloy at the bonding interface. Patent Document 4 shows that by using argon gas, the impact value and hardness become good, but does not describe a method of production of a clad material of a combination of metal materials other than titanium or the wave height and characteristics.

The following Patent Document 5 describes the method of interposing Ag or an Ag alloy layer between an aluminum alloy and steel. Patent Document 5 describes that no abnormality was found at the clad welded interface when fabricating a dissimilar joint from that clad material and welding together aluminum alloy and steel, but does not specifically describe investigating the wave height, penetrant inspection, or other aspects of the explosive welding interface.

The following Patent Document 6 describes interposing pure aluminum between aluminum alloy and Ag in aluminum alloy+Ag+stainless steel. Patent Document 6 shows that by inserting pure aluminum and by defining the thickness of silver, the impact energy absorption can be improved over the prior art. It does not allude to the resistance to leakage as a dissimilar joint or the wave height of the bonding interface.

The following Patent Document 7 has as its object to facilitate the welding together of carbon steel or stainless steel and aluminum pipes, rods, and plates and provides a joint in which titanium is selected as a material able to withstand the high temperature environment at the time of welding and in which the airtightness of the interface is superior. Patent Document 7 also describes a multilayer clad material configured by carbon steel-stainless steel-titanium-pure aluminum-corrosion resistant aluminum etc., but has as its object that the described joint can withstand the high temperature environment at the time of welding and does not show the amount of leakage under a cryogenic temperature in the case of use as a dissimilar joint or the wave height of the bonding interface which governs this.

The following Patent Document 8 considers the weldability in a dissimilar joint which includes an aluminum alloy and defines the ingredients of the aluminum alloy. Patent Document 8 describes inspecting the location which is MIG welded by a penetrant inspection test and that the weldability is good, but no description regarding the soundness of the bonding interface which is clad by explosive welding can be found.

The following Patent Document 9 shows a joint which is comprised of steel and copper-nickel alloy, titanium, aluminum, or aluminum alloy which are bonded by explosive welding. As an example of application, a ship vessel joint may be envisioned. However, Patent Document 9 mainly describes the configuration of the materials and does not show the results of evaluation of performance focusing on the bonding interface.

The following Patent Document 10 shows a method of production of a joined member of aluminum alloy, titanium, and steel by explosive welding, the use of aluminum alloy and steel, and the interface forming a wave shape, but no description of the wave height of the bonding interface or a method of production due to the performance can be found.

The following Patent Document 11 describes using explosive welding to bond aluminum+titanium+nickel+stainless steel and use of the same as a dissimilar metal joint material for an LNG tanker and shows the shape or plate thickness of the joint. Further, the required performance and results of measurement of performance for determining the mechanical properties of the joint are shown in the examples. However, this does not allude to the soundness of the bonding interface. No description of the measurement of the wave height and a penetrant inspection test can be found. In the above way, none of the above-mentioned references alludes at all or teaches or suggests the characteristics or method of production of a dissimilar metal joint material which can withstand use under a harsh environment.

### Prior Art References

### Patent Documents

Patent Document 1: Japanese Patent No. 3821966B3B
Patent Document 2: Japanese Unexamined Patent Publication (Kokai) No. 2000-135574A
Patent Document 3: Japanese Patent No. 0980251B
Patent Document 4: Japanese Patent No. 3323311B
Patent Document 5: Japanese Patent No. 0881656B
Patent Document 6: Japanese Patent No. 3431358B
Patent Document 7: Japanese Patent No. 0752320B
Patent Document 8: Japanese Unexamined Patent Publication (Kokai) No. 2012-200744A
Patent Document 9: U.S. Patent No. 5,213,904B Specification
Patent Document 10: U.K. Patent No. 2210307B Specification
Patent Document 11: Chinese Utility Model Specification (CN202878791 (U))

### Summary of Invention

### Problems to be solved by the Invention

The problem to be solved by the present invention is the provision of a dissimilar metal joint material where one outermost end has an aluminum alloy arranged at it and the other outermost end has stainless steel or steel arranged at it, which is free of leakage and has high joint or bonding characteristics even in a cryogenic environment and a method of production of the joint material.

### Means for solving the problems

The inventors engaged in in-depth studies and repeated experiments to solve the above problem and as a result discovered that if, at each of the bonding interfaces of the joint material, the wave height is 1 mm or less, preferably the total value of the lengths of defect indicator patterns at a penetrant inspection test is 1 mm or less, the result becomes a joint material which is free of leakage and has high joint or bonding characteristics and thereby completed the present invention.

That is, the present invention is as follows:
[1] A different-material joint comprised of a four-layer or more multilayer clad material where one outermost end is an aluminum alloy, the other outermost end is stainless steel or steel, the aluminum alloy is clad with pure aluminum, and an intermediate material between the pure aluminum and the stainless steel or steel includes one or more types of materials selected from the group comprising nickel, nickel alloy, titanium, titanium alloy, copper, copper alloy, and silver, the joint characterized in that all of the bonding interfaces between layers are wave-shaped bonding interfaces with wave heights of 1 mm or less, wherein said layers are bonded by explosive welding.
[2] The different-material joint according to [1], wherein at the bonding interfaces, indicator patterns which are detected by a penetrant inspection test of JIS Z 2343-1-II Cd-2 are all 1 mm or less.
[3] The different-material joint according to [1] or [2], wherein the joint is a pipe shape which has a predetermined circumferential length and, at the bonding interfaces, the total value of the lengths of the indicator patterns which are detected by the penetrant inspection test is 3% of the circumferential length or less.
[4] The different-material joint according to any one of [1] to [3], wherein in a Charpy impact test according to JIS Z 2242 after heat treatment at 350°C for 30 minutes, then a thermal cycle using boiling water (100°C) and liquid nitrogen (-196°C) repeated 1000 times, the impact energy absorption at the bonding interfaces is 15J or more.
[5] The different-material joint according to [1], wherein the intermediate material between the aluminum alloy and the stainless steel or steel includes two or more types of materials selected from the group comprising nickel, nickel alloy, titanium, and titanium alloy, the joint characterized in that all of the bonding interfaces between layers are wave-shaped bonding interfaces with wave heights of 1 mm or less.
[6] The different-material joint according to [5], wherein at the bonding interfaces, there are five or less indicator patterns which are detected by a penetrant inspection test of JIS Z 2343-1-II Cd-2 in a range of 10 mm length of the joint.
[7] A method of production of a different-material joint according to any one of [1] to [6comprising placing a base material on soil, placing materials to be bonded on the base material at predetermined intervals, setting powder explosive on the entire surfaces of the materials, and making the explosive explode to thereby make the materials bond with the base material by explosive welding so as to bond the different layers during which using cone penetration of a penetration type soil hardness meter to measure the reaction force of the soil and making the index hardness of the soil which is expressed using this as the reduced length 10 mm or less.
[8] The method according to [7] further comprising using sand grains which pass through a 6 mesh test sieve according to JIS Z8801 as the surface layer of the soil when bonding the layers.

### Effects of Invention

The different-material joint according to the present invention is free of leaks and has high joint or bonding characteristics even in a cryogenic temperature environment.

### Brief Description of Drawings

FIG. 1 is a cross-sectional view of a different-material joint.
FIG. 2 is a schematic view of a different-material metal joint which is used in the examples of the present invention.
FIG. 3 is a photo which explains the definition of wave height in a bonding interface.
FIG. 4 is a photo of indicator patterns in a penetrant inspection test.
FIG. 5 is a schematic view which explains a layer structure of a dissimilar metal joint for an LNG tanker.
FIG. 6 is a view which explains a specific example of a joint for joining a spherical tank made of aluminum which becomes a cryogenic temperature and the hull made of steel at a Moss type LNG tanker.

### Embodiments for carrying out the Invention

Below, embodiments of the present invention will be explained in detail. In this Description, the term "cryogenic temperature" means the extremely low temperature to which are exposed the air separation apparatuses for extraction of oxygen, nitrogen, and other gases as liquids which are used in chemical, ferrous metal, and other plants by cooling, liquefaction, and distillation of air, natural gas liquefaction apparatuses for liquefaction of natural gas tapped from gasfields through various processes, etc. and also includes the boiling point of helium of 4K (about 269°C below zero Centigrade) close to absolute zero (273.15°C below zero Centigrade).

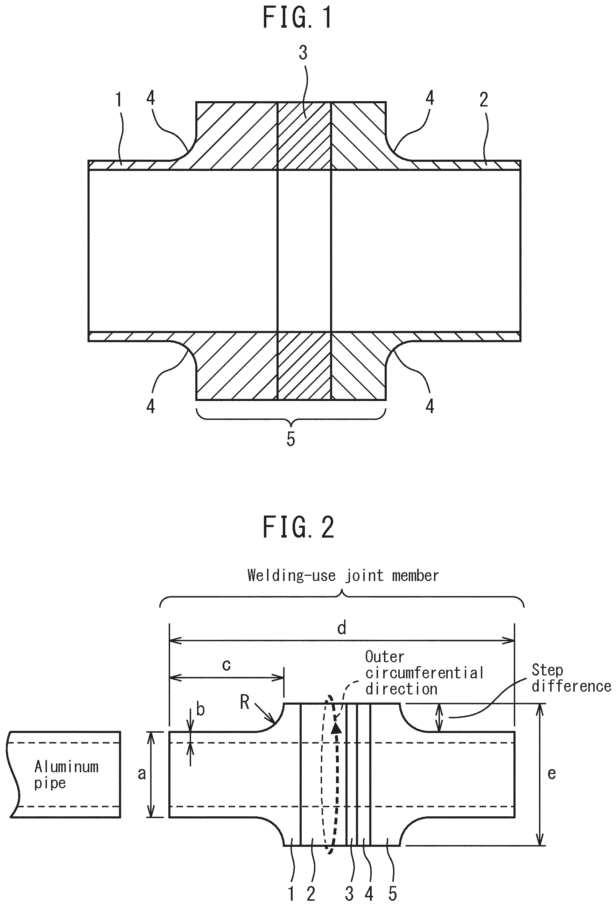

As shown in FIG. 1, a first aspect is a different-material joint having stainless steel as a first member 1, having a second member 2 comprised of a metal material selected from aluminum, an aluminum-based alloy, titanium, and a titanium-based alloy, and having at least one layer of an intermediate material 3, where the intermediate material 3 has a total plate thickness of 4 to 20 mm. The intermediate material 3 is one or more types of material selected from aluminum, titanium, nickel, silver, or silver alloy which has good bondability with a metal material selected from stainless steel or aluminum, an aluminum-based alloy, titanium, and a titanium-based alloy. The dissimilar joint preferably has a "flange part 5" which has the first member 1 and the second member 2 as starting points and has a thickness greater than the outside diameter of a pipe. The starting point of the flange part 5 has a fillet part with a radius of curvature of 1 mm or more whereby when a temperature or pressure load is applied due to the fluid which flows through the joint, no stress concentration occurs and the overall stress can be reduced.

Further, the value of the total length of the dissimilar joint divided by the length of the flange part 5 is preferably 1.5 or more. By cutting the parts other than the flange part 5 so that the value of the total length of the dissimilar joint divided by the length of the flange part 5 becomes 1.5 or more, the vicinity of the joint of the dissimilar metals can withstand a temperature or pressure load and the joint as a whole can be lightened, the load on the apparatus as a whole is lightened, and a structure with a good work efficiency results.

At the bonding faces between dissimilar metals of a dissimilar joint comprised of multiple layers are wave-shaped interfaces. Compared with a bonding interface which exhibits a straight shape, the bonded area increases, so the bonding strength becomes higher. On the other hand, if a wave-shaped interface becomes larger in wave length or wave height, formation of intermetallic compounds at the bonding interface becomes easier, so the bonding interface is liable to become hard and brittle. Therefore, the wave length and wave height of a wave-shaped bonding interface between dissimilar metals of the dissimilar joint are preferably respectively 1 mm or less.

As explained above, the first aspect is a different-material joint having stainless steel as a first member, having a second member comprised of a metal material selected from aluminum, an aluminum-based alloy, titanium, and a titanium-based alloy, and having at least one layer of an intermediate material. It is possible to improve the bonding ability by providing the intermediate material. Further, by giving a flange part which has the first member and second member as starting points, it is possible to achieve lighter weight and improvement of the work efficiency while maintaining the performance as a different-material joint. Further, by making the starting points of the flange part rounded shapes, concentration of stress at the starting points of the flange part can be avoided. Furthermore, by giving the bonding interface between dissimilar metals a wave-shaped interface and controlling the wave length and wave height of the wave-shaped interface, both a high bonding strength and high leakage resistance are obtained.

The different-material joint according to the present invention is a different-material joint comprised of a four-layer or more multilayer clad material where one outermost end is an aluminum alloy, the other outermost end is stainless steel or steel, the aluminum alloy is clad with pure aluminum, and an intermediate material between the pure aluminum and the stainless steel or steel includes one or more types of materials selected from the group comprising nickel, nickel alloy, titanium, titanium alloy, copper, copper alloy, and silver, in the joint, all of the bonding interfaces between layers are wave-shaped bonding interfaces with wave heights of 1 mm or less and at each of the bonding interfaces, the lengths of the indicator patterns which are detected by a penetrant inspection test according to JIS Z 2343-1-II Cd-2 or equivalent standards are all 1 mm or less.

In this example according to the present invention, there is provided a welding-use joint material where one outermost end is provided with an aluminum alloy, the other outermost end is provided with stainless steel or steel, a wave height of the bonding interfaces is 1 mm or less, and a total value of the lengths of defect indicator patterns in a penetrant inspection test is preferably 3% of the circumferential length or less, whereby leakage is minimized even in a cryogenic environment and high joint or bonding or bonding characteristics are exhibited.

The aluminum which is used in the present invention means the Alloy Nos. 1100, 1080, 1070, and 1050 or equivalent products of pure aluminum in the ASME Section II, Part B or JIS standard. The "aluminum alloy" is an alloy comprised of aluminum as a main ingredient other than the above-mentioned pure aluminum and including Fe ingredients or Mn, Mg, or other ingredients.

The steel and stainless steel are ones which contain Fe as main ingredients described in ASME Section II, Part A or the JIS standards or ones which contain ingredients equivalent to the above standards.

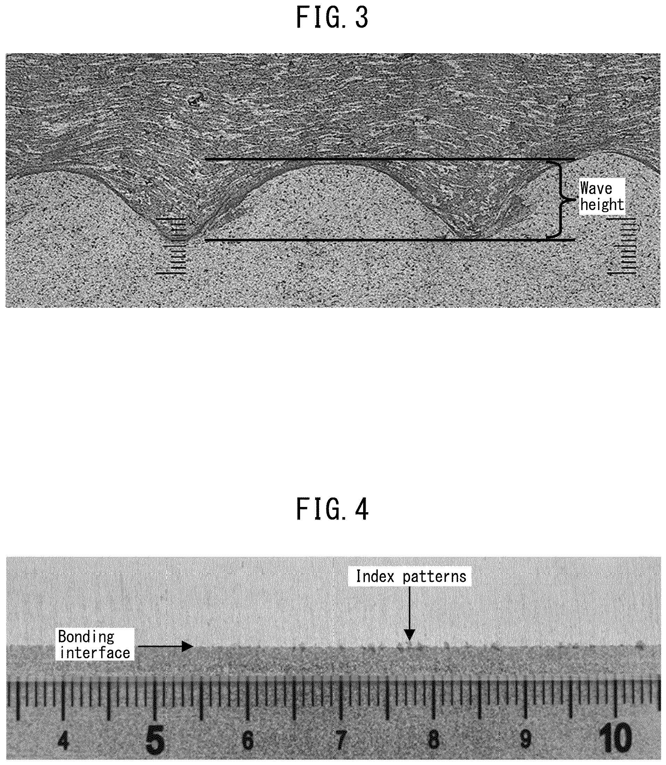

In the Description, the "wave height" at a bonding interface, as shown in FIG. 3, shows the height from the crest to the valley of a wave. In the present invention, the "wave height" means the value obtained by using a magnifying glass and calipers to measure any 10 points at the bonding interface on the outer circumferential surface of the joint material and finding the average value. However, in the following Examples 1 and 2, an electron microscope was used for measurement.

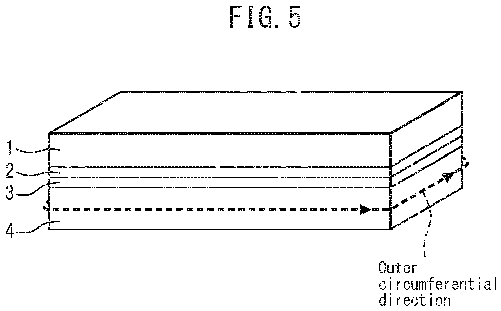

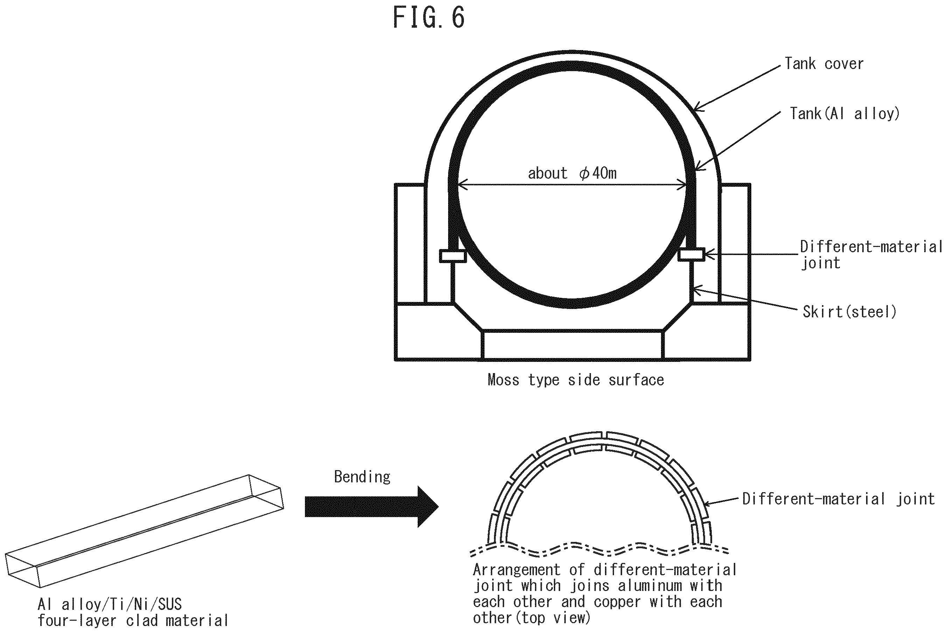

The penetrant inspection test was conducted according to JIS Z 2343-1-II Cd-2 or an equivalent standard and measured the size and number of detected red indicator patterns by calipers or other measurement equipment. Specifically, the "indicator patterns", as shown in FIG. 4, are red colored patterns by which scratches present on the material surface are visually observed by a penetrant solution which is obtained by a penetrant inspection test. The size and number of the detected patterns are measured using a caliper or other measuring device. In the present invention, in the case of a pipe joint, preferably the lengths of the indicator patterns are all 1 mm or less or the total value of the lengths of the indicator patterns is 3% or less of the circumferential length. Further, below, as the third aspect, in the case of a plate shaped different-material joint which is illustrated in FIGS. 5 and 6, it is preferable that the indicator patterns be 1 mm or less and there be five or less in the range of 10 mm length of the joint.

The "impact energy absorption" is a value obtained from the results of testing using a V-notch test piece in accordance with the Charpy impact test method of metal materials of JIS Z 2242. In the present invention, in the case a pipe joint, the impact energy absorption is preferably 15J or more at the bonding interfaces after heat treatment at 350°C for 30 minutes, then a thermal cycle using boiling water (100°C) and liquid nitrogen (-196°C) repeated 1000 times.

The test for evaluation of the amount of leakage was performed by the vacuum spraying system of the helium leak test method of JIS Z 2331 or an equivalent standard.

The index hardness of the soil expresses the value when using a penetration type soil hardness meter to measure the soil hardness of the ground surface or surface layer during which using cone penetration of the hardness meter to measure the reaction force of the soil and using this as the reduced length (mm). It is a value which is measured based on the soil hardness test method which is shown by the Japan Geotechnical Society. The measured surface was dug down 1 cm to form a flat surface which was measured repeatedly at five points. The index hardness was determined by discarding the maximum value and minimum value, calculating the average value of the remaining three points, and using the resultant value as the index hardness at the measured surface.

The sand grains of the soil surface layer when performing the explosive welding are made grains which all pass through the test sieve prescribed in JIS Z 8801. The soil surface layer is about 10 cm.

Note that the dissimilar metal joint of the first aspect or second aspect of the present invention is not limited to the various types of pipes of the above-mentioned air separation apparatuses or natural gas liquefaction apparatus and can also be used in the case of welding together aluminum or aluminum alloy and various other types of metal of building structures, transport equipment, etc.

A different-material joint is illustrated in FIGS. 5 and 6 and joins a spherical tank of a Moss type LNG tanker with a steel hull, but it can also be used for the case of welding together aluminum alloy and another type of metal in another ship or transport equipment, structural member, etc. In the above way, in a plate shaped different-material joint of a third aspect, joint in this configuration, it is preferable that the indicator patterns be 1 mm or less and there be given five or less in the range of 10 mm length of the joint.

Another aspect of the present invention is a method of production of a different-material joint comprising placing a base material on soil, placing materials to be bonded on the base material at predetermined intervals, setting powder explosive on the entire surfaces of the materials, and making the explosive explode to thereby make the materials bond with the base material by explosive welding so as to bond the different layers during which using cone penetration of a penetration type soil hardness meter to measure the reaction force of the soil and making the index hardness of the soil which is expressed using this as the reduced length 10 mm or less. When bonding the different layers, it is preferable to use the sand grains which pass through a 6 mesh test sieve according to JIS Z8801 as the surface layer of the soil.

"Explosive welding" is one of the methods of bonding metals utilizing the high pressure of explosives. In particular, it enables dissimilar metals to be strongly bonded. The biggest feature of this technique is that bonding metal materials is possible without almost any heat load, so it is possible to strongly bond even a combination of metals which cannot be bonded by an ordinary method. Furthermore, it is known that bonding interface of metals which are bonded by explosive welding as the mechanism for realizing a strong bond exhibits a specific wave shape. It is also said that this is due to the fact that the bonding surface is larger than a straight bonding interface. However, as the size of this wave-shaped interface becomes larger, the plastic deformation or heat effect at the time of bonding becomes larger, so this leads to formation of an alloy layer at the bonding interface. If an alloy layer is formed at a bonding interface, the bonded part tends to become hard and brittle, so microcracks easily form at the bonding interface. When a different-material joint is used in the above such facility, apparatus, etc. which is exposed to a cryogenic environment, there is the danger of microcracks becoming enlarged or advancing and leading to serious accidents. Therefore, it is important to control the wave height of the bonding interface and perform a penetrant inspection test which confirms the presence of microcracks.

The explosive which is used for the explosive welding is an explosive which generates a detonation wave. To strongly bond metal plates, it is preferable to use an explosive with a detonation velocity of 1000 m/sec. To obtain a more suitable bonding force, it is more preferable to use an explosive with a velocity of 1/3 to 1/2 of the speed of sound of 1500 m to 3000 m/sec. As explosives, specifically ammonium nitrate or nitric acid esters such as PETN (pentaerythritol tetranitrate) or nitroglycerin, nitro compounds such as TNT (trinitrotoluene), nitramines such as cyclotrimethylene trinitramine or cyclotetramethylene tetranitramine, etc. may be mentioned. These may be used alone or mixed with other explosive ingredients or other ingredients besides explosives.

### EXAMPLES

Below, the present invention will be specifically explained based on the examples, but the present invention is not limited to these needless to say.

### [Example 1]

A five-layer clad material was prepared comprised using an aluminum alloy (JIS A5052P-O, plate thickness: 40 mm) as a first member, having intermediate materials comprised of industrial use pure aluminum (JIS A1100P-H112, plate thickness: 12 mm), industrial use pure titanium (JIS TP270C plate thickness: 2 mm), and industrial use pure nickel (JIS NW2200, plate thickness: 1.6 mm), and having a second member comprised of stainless steel (JIS SUS304L, plate thickness: 30 mm). The value of the total length of the dissimilar joint divided by the flange part length was 1.9. The wave lengths and wave heights of the bonding interfaces were respectively 549 and 221 µm at the bonding interface of aluminum alloy and pure aluminum, 839 and 125 µm at the bonding interface of pure aluminum and titanium, 451 and 144 µm at the bonding interface of titanium and nickel, and 717 and 173 µm at the bonding interface of nickel and stainless steel. At the obtained joint, a helium leak test was performed in accordance with the "helium leak test method" of JIS Z 2331, whereupon the result was 3.2 x 10⁻¹¹ Pa ·m³/sec (ordinary temperature). It was learned that the member had an excellent leakage resistance. Further, in accordance with JIS Z 2242, a Charpy impact test piece was prepared, cooled at -196°C (liquid nitrogen), then was subjected to an impact test, whereupon energy absorption values of 52J at the bonding interface of aluminum alloy and pure aluminum, 62J at the bonding interface of pure aluminum and titanium, 104J at the bonding interface of titanium and nickel, and 90J at the bonding interface of nickel and stainless steel.

### [Example 2]

A four-layer clad material was prepared using an aluminum alloy (JIS A5052P-O, plate thickness: 50 mm) as a first member, having intermediate materials comprised of industrial use pure aluminum (JIS A1100P-H112, plate thickness: 12 mm) and silver plate (JIS H2141 Grade 1, plate thickness: 1 mm), and having a second member comprised of stainless steel (JIS SUS304L, plate thickness: 50 mm). The value of the total length of the dissimilar joint divided by the flange part length was 1.9. The wavelengths and wave heights of the bonding interfaces were respectively 858 and 322 µm for the bonding interface of aluminum alloy and pure aluminum, 500 and 79 µm for the bonding interface of pure aluminum and silver, and 250 and 50 µm for the bonding interfaces of silver and stainless steel. The obtained joint was tested by a helium leak test in accordance with the "helium leak test method" of JIS Z 2331, whereby it is learned that the result was 1.3 x 10⁻¹¹ Pa ·m³/sec (ordinary temperature). It was learned that the member had an excellent leakage resistance. Further, in accordance with JIS Z 2242, a Charpy impact test piece was prepared, cooled at -196°C (liquid nitrogen), then was subjected to an impact test, whereupon energy absorption values of 39J at the bonding interface of aluminum alloy and pure aluminum, 61J at the bonding interface of pure aluminum and silver, and 65J at the bonding interface of silver and stainless steel were obtained.

### [Example 3]

In a soil environment with a soil surface layer with sand grains which pass through a 6 mesh and with soil of an average index hardness of 4.9 mm, a five-layer clad material comprised of aluminum alloy (ASME SB-209 5083-O), pure aluminum (ASME SB-209 1100-H112), titanium (ASME SB-265 Grade 1), nickel (ASME SB-162 UNS NO02200), and stainless steel (ASME SA-240 Type304L) was fabricated by explosive welding. This clad material was examined by an ultrasonic inspection test according to JIS G 0601. A dissimilar joint of the shape shown in FIG. 2 was prepared from the position confirmed to be bonded and was evaluated for performance (a=73 mm, b=4.4 mm, c=25 mm, d=80 mm, e=102 mm, R=5 mm).

The wave heights of the bonding interfaces were measured using a magnifying glass and calipers on the outer circumferential surface of the bonding material (part "e" of FIG. 2). A penetrant inspection test was performed over the entire outer circumferential surface according to JIS Z 2343-1-II Cd-2 to measure the lengths or diameters of the detected indicator patterns. A helium leak test was run according with the vacuum spraying method of JIS Z 2331. The results are shown in the following Table 1. It was confirmed that the wave heights and indicator patterns were in the scopes of [1] to [3] of the present invention and were free of leakage as well.

**[Table 1]**

| | | Al/Al interface | Al/Ti interface | Ti/Ni interface | Ni/TP304L interface |
|---|---|---|---|---|---|
| Wave height | | 200 µm | 100 µm | 100 µm | 200 µm |
| Indicator patterns | Length (max) | 0 mm | 0.05 mm | 0.05 mm | 0 mm |
| | Total | 0 mm | 0.1 mm | 0.1 mm | 0 mm |
| | Ratio | 0% | 0.03% | 0.03% | 0% |
| Amount of leakage | | 1.0 x 10⁻¹⁰ Pa ·m³/sec or less | | | |

Next, the joint material was heat treated at 350°C for 30 minutes considering weld heat, then was subjected to a thermal cycle using boiling water (100°C) and liquid nitrogen (-196°C) repeated 1000 times, then was again subjected to similar tests. Furthermore, from the joint material, an impact test piece according to JIS Z 2242 was taken and tested. The results are shown in the following Table 2. Even if weld heat or a thermal cycle was applied, it was confirmed that there was no deterioration of performance and there was sufficient performance as a joint. In the impact test, fracture occurred in all ASME SB-209 1100-H112 materials. No fracture occurred at the bonding interface formed with a V-notch.

**[Table 2]**

| | | Al/Al interface | Al/Ti interface | Ti/Ni interface | Ni/TP304L interface |
|---|---|---|---|---|---|
| Wave height | | 200 µm | 100 µm | 100 µm | 200 µm |
| Indicator patterns | Length (max) | 0 mm | 0.05 mm | 0.05 mm | 0 mm |
| | Total | 0 mm | 0.1 mm | 0.1 mm | 0 mm |
| | Ratio | 0% | 0.03% | 0.03% | 0% |
| Amount of leakage | | 1.0 x 10⁻¹⁰ Pa ·m³/sec or less | | | |
| Absorbed energy (n=3) | | 56J | 60J | 90J | 87J |

### [Example 4]

In a soil environment with soil with an index hardness of 4.9 mm and a soil surface layer with sand grains which pass through a 6 mesh, a four-layer clad material comprised of aluminum alloy (ASME SB-209 5083-O), pure aluminum (ASME SB-209 1100-H112), silver (ASTM B-413), and stainless steel (ASME SA-240 Type304L) was fabricated by explosive welding. This clad material was examined by an ultrasonic inspection test according to JIS G 0601. From the position where the joint was confirmed, a dissimilar joint of the shape which is shown in FIG. 2 was fabricated and evaluated for performance (a=60 mm, b=7 mm, c=25 mm, d=106 mm, e=76 mm, R=5 mm). The results of measurement of the wave heights of the bonding interfaces and the results of the penetrant inspection test and helium leak test are shown in the following Table 3. It was confirmed that the wave height/indicator patterns were inside the scopes of [1] to [4] of the present invention and that no leakage occurred.

**[Table 3]**

| | | Al/Al interface | Al/Ag interface | Ag/TP304L interface |
|---|---|---|---|---|
| Wave height | | 300 µm | 100 µm | 100 µm |
| Indicator patterns | Length (max) | 0 mm | 0 mm | 0 mm |
| | Total | 0 mm | 0 mm | 0 mm |
| | Ratio | 0% | 0% | 0% |
| Amount of leakage | | 1.0 x 10⁻¹⁰ Pa ·m³/sec or less | | |
| Absorbed energy (n=3) | | 39J | 61J | 65J |

### [Comparative Example 1]

Except for performing explosive welding with an average index hardness of 20 mm in a soil environment with a soil surface layer with sand grains passing through a 6 mesh, the same procedure as in Example 3 was followed to prepare a clad plate. From this, a joint material was fabricated and evaluated for performance. The results are shown in the following Table 4. A joint material with a wave height and indicator patterns outside of the scopes of [1] to [3] of the present invention was fabricated. However, no leakage could be confirmed in a helium leak test.

**[Table 4]**

| | | Al/Al interface | Al/Ti interface | Ti/Ni interface | Ni/TP304L interface |
|---|---|---|---|---|---|
| Wave height | | 2000 µm | 500 µm | 500 µm | 300 µm |
| Indicator patterns | Length (max) | 2.6 mm | 1.7 mm | 0.6 mm | 0 mm |
| | Total | 28.0 mm | 21.0 mm | 3.0 mm | 0 mm |
| | Ratio | 8.7% | 6.6% | 0.8% | 0% |
| Amount of leakage | | 1.0 x 10⁻¹⁰ Pa ·m³/sec or less | | | |

Next, the joint material was heat treated at 350°C for 30 minutes considering the weld heat, then was subjected to a thermal cycle using boiling water (100°C) and liquid nitrogen (-196°C) repeated 1000 times and again similarly tested. The results are shown in the following

Table 5. Compared with before the thermal cycle test, the indicator pattern length became enlarged. Leakage was detected at the helium leak test. It was confirmed that the wave height of the bonding interface and the indicator patterns becoming larger lowers the performance of the joint and results in the strength at cryogenic temperatures becoming inferior.

**[Table 5]**

| | | Al/Al interface | Al/Ti interface | Ti/Ni interface | Ni/TP304L interface |
|---|---|---|---|---|---|
| Wave height | | 2000 µm | 500 µm | 500 µm | 300 µm |
| Indicator patterns | Length (max) | 4.7 mm | 4.5 mm | 1.1 mm | 0 mm |
| | Total | 31.0 mm | 29.0 mm | 11.0 mm | 0 mm |
| | Ratio | 9.9% | 9.1% | 3.4% | 0% |
| Amount of leakage | | Leakage occurs | | | |

### [Reference Example 5]

In a soil environment with soil of an average index hardness of 4.9 mm and with a soil surface layer with sand grains which pass through a 6 mesh, a four-layer clad material comprised of an aluminum alloy (JIS A3003P-O), titanium (JIS TP270C), nickel (JIS NW2201), and stainless steel (JIS SUS304L) was fabricated by explosive welding. This clad material was examined by an ultrasonic inspection test according to JIS G 0601. From a position where bonding was confirmed, a 9 mm×250 mm joint material was cut out by a bandsaw with the plate thickness as is. The cut surface of the outer circumference of the joint material was polished to finish the surface. The wave height of the bonding interface was measured on the outer circumferential surface of the joint material using a magnifying glass and calipers. A penetrant inspection test was performed over the entire outer circumferential surface according to JIS Z 2343-1-II Cd-2 to measure the length or diameter of the detected indicator patterns. The results are shown in the following Table 6. The wave height was within the scopes of [10] to [11] of the present invention. No indicator patterns at all were detected.

**[Table 6]**

| | Al/Ti interface | Ti/Ni interface | Ni/304L interface |
|---|---|---|---|
| Wave height | 100 µm | 100 µm | 200 µm |
| Indicator patterns | Not detected | | |

Next, the joint material was side bent by R=6T-90° in accordance with JIS G0601, heat treated at 350°C for 30 minutes considering the weld heat, and subjected to a thermal cycle using boiling water (100°C) and liquid nitrogen (-196°C) repeated 1000 times, then was again subjected to a penetrant inspection test. As a result, no indicator patterns at all were detected. It was confirmed that if in the scope of the present invention, even if bending, weld heat, or a thermal cycle is applied, there is no effect on the physical properties of the bonding interface and there is sufficient performance as a joint.

### [Comparative Example 2]

Using materials similar to Example 5, a four-layer clad material was fabricated in a soil environment with soil of an average index hardness of 20 mm and with a soil surface layer with sand grains which pass through a 6 mesh. From this, a joint material the same as in Example 5 was cut out and evaluated for performance. The results are shown in the following Table 7. A joint material with a wave height and indicator patterns outside the scopes of [10] to [11] of the present invention was fabricated.

**[Table 7]**

| | | Al/Ti interface | Ti/Ni interface | Ni/TP304L interface |
|---|---|---|---|---|
| Wave height | | 1200 µm | 1100 µm | 1900 µm |
| Indicator patterns | Length (max) | 1.1 mm | 0.6 mm | 0.2 mm |
| | Total | 8.0 mm | 3.5 mm | 0.6 mm |

Next, the joint material which was subjected to a side bend test, heat treatment, and thermal cycle similar to the examples was subjected to a penetrant inspection test. The results are shown in the following Table 8. The indicator pattern lengths were respectively enlarged. Further, a location where six indicator patterns of less than 1 mm length are confirmed in a range of 10 mm of product length was detected as a single large indicator pattern where all of the indicator patterns were connected. In particular, at the aluminum and titanium interface, there was visibly observable peeling. The indicator patterns were also formed over a broad range, so it was confirmed that a product which is outside the scopes of [10] to [11] of the present invention did not have performance as a joint.

**[Table 8]**

| | | Al/Ti interface | Ti/Ni interface | Ni/TP304L interface |
|---|---|---|---|---|
| Wave height | | 1200 µm | 1100 µm | 1900 µm |
| Indicator patterns | Length (max) | 26.1 mm | 1.1 mm | 0.3 mm |
| | Total | 330.0 mm | 12.2 mm | 0.8 mm |

### Industrial Applicability

Facilities and apparatuses in which performance under a cryogenic environment or high vacuum is sought often use media which are high in pressure or hazardous. If their members are damaged, there is a possibility of not only economic loss but also bodily injury being caused. For this reason, if the joined state is poor and the joint performance is low in a dissimilar joint, aging or unforeseen stress concentration, thermal cycles, etc. cause cracks to form and grow which can lead to the above-mentioned problems. The welding-use joint material according to the present invention can exhibit a high reliability and a high joint or bonding performance even under a cryogenic environment, so suitable use is possible in facilities and apparatuses where performance under a cryogenic environment or high vacuum is sought.

### Brief Description of the Reference Symbols

### (Notations of FIG. 1)

1. first member
2. second member
3. third member (intermediate material)
4. fillet part
5. flange part

### (Notations of FIG. 2)

1. aluminum alloy
2. aluminum
3. titanium
4. nickel
5. stainless steel

### (Notations of FIG. 5)

1. aluminum alloy
2. titanium
3. nickel
4. stainless steel

## Claims

1. A different-material joint comprised of a four-layer or more multilayer clad material where one outermost end is an aluminum alloy (1), the other outermost end is stainless steel or steel (5), said aluminum alloy (1) is clad with pure aluminum (2), and an intermediate material between said pure aluminum (2) and said stainless steel or steel (5) includes one or more types of materials selected from the group comprising nickel (4), nickel alloy, titanium (3), titanium alloy, copper, copper alloy, and silver, said joint **characterized in that** all of said bonding interfaces between layers are wave-shaped bonding interfaces with wave heights of 1 mm or less, wherein said layers are bonded by explosive welding.

2. The different-material joint according to claim 1, wherein at said bonding interfaces, indicator patterns which are detected by a penetrant inspection test of JIS Z 2343-1-II Cd-2 are all 1 mm or less.

3. The different-material joint according to claim 1 or 2, wherein said joint is a pipe shape which has a predetermined circumferential length and, at said bonding interfaces, the total value of the lengths of the indicator patterns which are detected by said penetrant inspection test is 3% of said circumferential length or less.

4. The different-material joint according to any one of claims 1 to 3, wherein in a Charpy impact test according to JIS Z 2242 after heat treatment at 350°C for 30 minutes, then a thermal cycle using boiling water (100°C) and liquid nitrogen (-196°C) repeated 1000 times, the impact energy absorption at the bonding interfaces is 15J or more.

5. The different-material joint according to claim 1, wherein the intermediate material between said pure aluminum alloy (2) and said stainless steel or steel (5) includes two or more types of materials selected from the group comprising nickel (4), nickel alloy, titanium (3), and titanium alloy, said joint **characterized in that** all of said bonding interfaces between layers are wave-shaped bonding interfaces with wave heights of 1 mm or less.

6. The different-material joint according to claim 5, wherein at said bonding interfaces, there are five or less indicator patterns which are detected by a penetrant inspection test of JIS Z 2343-1-II Cd-2 in a range of 10 mm length of the joint.

7. A method of production of a different-material joint according to any one of claims 1 to 6 comprising placing a base material (1, 5) on soil, placing materials (2, 3, 4, 5 ; 1, 2, 3, 4) to be bonded on said base material (1, 5) at predetermined intervals, setting powder explosive on the entire surfaces of the materials (1-5), and making said explosive explode to thereby make the materials (1-5) bond with the base material by explosive welding so as to bond the different layers during which using cone penetration of a penetration type soil hardness meter to measure the reaction force of the soil and making the index hardness of the soil which is expressed using this as the reduced length 10 mm or less, wherein the index hardness of the soil expresses the value when using a penetration type soil hardness meter to measure the soil hardness of the ground surface or surface layer during which using cone penetration of the hardness meter to measure the reaction force of the soil and using this as the reduced length (mm), which is a value being measured based on the soil hardness test method according to the Japan Geotechnical Society.

8. The method according to claim 7 further comprising using sand grains which pass through a 6 mesh test sieve according to JIS Z8801 as the surface layer of the soil when bonding the layers.

9. Use of the different-material joint according to any one of claims 1 to 4, in a liquefaction and gasification plant facility of liquefied natural gas.

10. Use of the different-material joint according to any one of claims 1 to 4, in an air separation apparatus.

11. The different-material joint according to any one of claims 1 to 4, wherein the different-material joint is comprised of five layers of aluminum alloy, pure aluminum, titanium, nickel, and stainless steel, for joining aluminum piping and stainless steel piping.

## Patentansprüche

1. Verbindung verschiedener Materialien, bestehend aus einem vierschichtigen oder höher mehrschichtigen plattierten Material, bei dem ein äußeres Ende eine Aluminiumlegierung (1) ist, das andere äußere Ende rostfreier Stahl oder Stahl (5) ist, wobei die Aluminiumlegierung (1) mit reinem Aluminium (2) plattiert ist, und ein zwischenliegendes Material zwischen dem reinen Aluminium (2) und dem rostfreien Stahl oder Stahl (5) einen oder mehrere Typen von Materialien ausgewählt aus der Gruppe umfassend Nickel (4), Nickellegierung, Titan (3), Titanlegierung, Kupfer, Kupferlegierung und Silber enthält, wobei die Verbindung **dadurch gekennzeichnet ist, dass** alle der bindenden Grenzflächen zwischen Schichten wellenförmige bindende Grenzflächen mit Wellenhöhen von 1 mm oder weniger sind, wobei die Schichten durch Sprengschweißen verbunden sind.

2. Verbindung verschiedener Materialien gemäß Anspruch 1, wobei an den bindenden Grenzflächen Indikatorstrukturen, die von einer Penetrationsprüfung nach JIS Z 2343-1-II Cd-2 erfasst werden, alle 1 mm oder weniger betragen.

3. Verbindung verschiedener Materialien gemäß Anspruch 1 oder 2, wobei die Verbindung eine Rohrform aufweist, die eine vorbestimmte Umfangslänge aufweist, und an den bindenden Grenzflächen der Gesamtwert der Längen der Indikatorstrukturen, die von der Penetrationsprüfung erfasst werden, 3 % der Umfangslänge oder weniger beträgt.

4. Verbindung verschiedener Materialien gemäß einem der Ansprüche 1 bis 3, wobei nach 30 Minuten Wärmebehandlung bei 350 °C und einem anschließenden, 1000-mal wiederholten Wärmezyklus unter Verwendung von siedendem Wasser (100 °C) und flüssigem Stickstoff (-196 °C) bei einer Charpy-Schlagfestigkeitsprüfung gemäß JIS Z 2242 die Schlagenergieabsorption an den bindenden Grenzflächen 15 J oder mehr beträgt.

5. Verbindung verschiedener Materialien gemäß Anspruch 1, wobei das zwischenliegende Material zwischen der reinen Aluminiumlegierung (2) und dem rostfreien Stahl oder Stahl (5) zwei oder mehr Typen von Materialien ausgewählt aus der Gruppe umfassend Nickel (4), Nickellegierung, Titan (3) und Titanlegierung enthält, wobei die Verbindung **dadurch gekennzeichnet ist, dass** alle der bindenden Grenzflächen zwischen Schichten wellenförmige bindende Grenzflächen mit Wellenhöhen von 1 mm oder weniger sind.

6. Verbindung verschiedener Materialien gemäß Anspruch 5, wobei an den bindenden Grenzflächen fünf oder weniger Indikatorstrukturen, die von einer Penetrationsprüfung nach JIS Z 2343-1-II Cd-2 erfasst werden, in einem Bereich von 10 mm Länge der Verbindung vorliegen.

7. Verfahren zur Herstellung einer Verbindung verschiedener Materialien gemäß einem der Ansprüche 1 bis 6, umfassend Platzieren eines Grundmaterials (1, 5) auf einem Untergrund, Platzieren von Materialien (2, 3, 4, 5; 1, 2, 3, 4), die zu binden sind, auf dem Grundmaterial (1, 5) in vorbestimmten Intervallen, Anordnen von Pulverexplosivstoff auf den gesamten Oberflächen der Materialien (1-5) und Explodierenlassen des Explosivstoffs, um dadurch die Materialien (1-5) durch Sprengschweißen mit dem Grundmaterial binden zu lassen, um die verschiedenen Schichten zu verbinden, währenddessen Kegelpenetration eines Untergrundhärtemessers vom Penetrationstyp zum Messen der Reaktionskraft des Untergrunds durchgeführt wird und die Indexhärte des Untergrunds bestimmt wird, die unter Verwendung davon als die verringerte Länge von 10 mm oder weniger ausgedrückt wird, wobei die Indexhärte des Untergrunds den Wert bei Verwendung eines Untergrundhärtemesser vom Penetrationstyp zum Messen der Untergrundhärte der Grundoberfläche oder Oberflächenschicht während der Verwendung der Kegelpenetration des Härtemessers zum Messen der Reaktionskraft des Untergrunds ausdrückt und dies als verringerte Länge (mm) verwendet wird, die ein Wert ist, der auf Grundlage des Untergrundhärteprüfverfahrens gemäß der Japan Geotechnical Society gemessen wird.

8. Verfahren gemäß Anspruch 7, ferner umfassend die Verwendung von Sandkörnern, die durch ein 6-Mesh-Prüfsieb gemäß JIS Z8801 passieren, als die Oberflächenschicht des Untergrunds, wenn die Schichten verbunden werden.

9. Verwendung der Verbindung verschiedener Materialien gemäß einem der Ansprüche 1 bis 4 in einer Verflüssigungs- und Vergasungsanlage für verflüssigtes Erdgas.

10. Verwendung der Verbindung verschiedener Materialien gemäß einem der Ansprüche 1 bis 4 in einer Lufttrennanlage.

11. Verbindung verschiedener Materialien gemäß einem der Ansprüche 1 bis 4, wobei die Verbindung verschiedener Materialien aus fünf Schichten von Aluminiumlegierung, reinem Aluminium, Titan, Nickel und rostfreiem Stahl besteht, zum Verbinden von Aluminiumrohren und Rohren aus rostfreiem Stahl.

## Revendications

1. Raccord pour des matériaux différents constitué d'un matériau plaqué multicouche à quatre ou plus de quatre couches, une extrémité la plus à l'extérieur étant un alliage d'aluminium (1), l'autre extrémité la plus à l'extérieur étant de l'acier inoxydable ou de l'acier (5), ledit alliage d'aluminium (1) étant plaqué avec de l'aluminium pur (2) et un matériau intermédiaire entre ledit aluminium pur (2) et ledit acier inoxydable ou acier (5) renfermant un ou plusieurs types de matériaux choisis dans le groupe comprenant le nickel (4), un alliage de nickel, le titane (3), un alliage de titane, le cuivre, un alliage de cuivre et l'argent, ledit raccord étant **caractérisé en ce que** la totalité desdites interfaces de liaison entre les couches sont des interfaces de liaison de forme ondulée avec des hauteurs d'ondulation inférieures ou égales à 1 mm, dans lequel lesdites couches sont liées par soudage par explosion.

2. Raccord pour des matériaux différents selon la revendication 1, dans lequel auxdites interfaces de liaison, des motifs indicateurs qui sont détectés par un essai de ressuage de la norme JIS Z 2343-1-II Cd-2 sont tous inférieurs ou égaux à 1 mm.

3. Raccord pour des matériaux différents selon la revendication 1 ou 2, dans lequel ledit raccord est une forme de tuyau qui a une longueur circonférentielle prédéfinie et, auxdites interfaces de liaison, la valeur totale des longueurs des motifs indicateurs qui sont détectés par ledit essai de ressuage est inférieure ou égale à 3 % de ladite longueur circonférentielle.

4. Raccord pour des matériaux différents selon l'une quelconque des revendications 1 à 3, dans lequel dans un essai de résilience Charpy selon la norme JIS Z 2242 après traitement thermique à 350 °C pendant 30 minutes, puis un cycle thermique utilisant de l'eau bouillante (100 °C) et de l'azote liquide (-196 °C) répété 1000 fois, l'absorption d'énergie de choc aux interfaces de liaison est supérieure ou égale à 15 J.

5. Raccord pour des matériaux différents selon la revendication 1, dans lequel le matériau intermédiaire entre ledit alliage d'aluminium pur (2) et ledit acier inoxydable ou acier (5) renferme deux ou plus de deux types de matériaux choisis dans le groupe comprenant le nickel (4), un alliage de nickel, le titane (3) et un alliage de titane, ledit raccord étant **caractérisé en ce que** la totalité desdites interfaces de liaison entre les couches sont des interfaces de liaison de forme ondulée avec des hauteurs d'ondulation inférieures ou égales à 1 mm.

6. Raccord pour des matériaux différents selon la revendication 5, dans lequel auxdites interfaces de liaison, il y a cinq ou moins de cinq motifs indicateurs qui sont détectés par un essai de ressuage de la norme JIS Z 2343-1-II Cd-2 dans une plage de longueur du raccord de 10 mm.

7. Procédé de production d'un raccord pour des matériaux différents selon l'une quelconque des revendications 1 à 6 comprenant le placement d'un matériau de base (1, 5) sur le sol, le placement de matériaux (2, 3, 4, 5 ; 1, 2, 3, 4) à lier sur ledit matériau de base (1, 5) à des intervalles prédéfinis, la disposition d'explosif en poudre sur toutes les surfaces des matériaux (1-5) et le fait d'amener ledit explosif à exploser pour de cette manière amener les matériaux (1-5) à se lier avec le matériau de base par soudage par explosion de manière à lier les différentes couches et en même temps l'utilisation de la pénétration d'un cône d'un instrument de mesure de dureté de sol de type à pénétration pour mesurer la force de réaction du sol et le fait d'amener l'indice de dureté du sol qui est exprimé à l'aide de celle-ci sous forme de longueur réduite à être inférieur ou égal à 10 mm, l'indice de dureté du sol exprimant la valeur lors de l'utilisation d'un instrument de mesure de dureté du sol de type à pénétration pour mesurer la dureté du sol de la surface du sol ou de la couche de surface et en même temps l'utilisation de la pénétration du cône de l'instrument de mesure de dureté pour mesurer la force de réaction du sol et l'utilisation de celle-ci sous forme de longueur réduite (mm), qui est une valeur qui est mesurée sur la base de la méthode d'essai de dureté du sol selon la Société géotechnique du Japon.

8. Procédé selon la revendication 7 comprenant en outre l'utilisation de grains de sable qui passent dans un tamis d'essai de 6 mesh selon la norme JIS Z8801 en tant que couche de surface du sol lors de la liaison des couches.

9. Utilisation du raccord pour des matériaux différents selon l'une quelconque des revendications 1 à 4, dans une installation d'usine de liquéfaction et de gazéification de gaz naturel liquéfié.

10. Utilisation du raccord pour des matériaux différents selon l'une quelconque des revendications 1 à 4, dans un appareil de séparation de l'air.

11. Raccord pour des matériaux différents selon l'une quelconque des revendications 1 à 4, le raccord pour des matériaux différents étant constitué de cinq couches d'alliage d'aluminium, d'aluminium pur, de titane, de nickel et d'acier inoxydable, pour le raccordement d'une tuyauterie en aluminium et d'une tuyauterie en acier inoxydable.
